# EUROPÄISCHE PATENTANMELDUNG

(11) **EP 3 629 106 A1**
(43) Veröffentlichungstag der Anmeldung: **01.04.2020**
(21) Anmeldenummer: 18197547.5
(22) Anmeldetag: 28.09.2018
(51) Int. Cl.: G05B 17/02

(54) **SYSTEM ZUR SIMULATION EINER INDUSTRIELLEN ANLAGE**

(71) Anmelder: Siemens Aktiengesellschaft, 80333 München (DE)
(72) Erfinder: Jäckisch, Horst, 90766 Fürth (DE); Lehner, Peter, 91257 Pegnitz (DE); Wäger, Andreas, 90425 Nürnberg (DE)

(57) **Zusammenfassung**

Bei einem System (20) zur Simulation einer industriellen Anlage (1), umfassend eine Datenverarbeitungseinrichtung (30) und eine Momentaufnahme-Einrichtung (21) zur Abspeicherung von Zuständen einer Simulation der Anlage (1) zu einem definierten oder definierbaren Zeitpunkt, ist erfindungsgemäß die Anlage (1) durch zumindest eine virtuelle Maschine (25) nachgebildet, die in der Datenverarbeitungseinrichtung (30) ablaufbar ist, und die Momentaufnahme-Einrichtung (21) ist ausgebildet, ein Abbild (26) der zumindest einen virtuellen Maschine (25) zu einem definierten oder definierbaren Zeitpunkt zu erzeugen und dieses Abbild in einem Datenspeicher (40) abzuspeichern.

## Beschreibung

Die Erfindung betrifft ein System zur Simulation einer industriellen Anlage gemäß Oberbegriff des Patentanspruchs 1. Ein derartiges System ist beispielsweise aus der EP 3 121 667 A1 bekannt.

Industrielle Anlagen kommen in verschiedensten Industriesektoren zum Einsatz, zum Beispiel in der Energieerzeugung, der Prozess-Industrie (z.B. Chemie, Pharma, Metall, Öl- und Gas) und der diskreten Fertigungsindustrie. Der eigentliche branchenspezifische Prozess, z.B. Energieerzeugungs- oder Produktionsprozess, wird dabei üblicherweise durch ein Automatisierungssystem gesteuert und/oder geregelt.

Das Automatisierungs-System kann dabei eine oder mehrere industrielle Steuerungen umfassen. Jede der Steuerungen steuert dann den Betrieb jeweils eines Teilbereichs des Prozesses in Abhängigkeit von dessen Betriebszuständen. Der Prozess umfasst hierzu von den Steuerungen ansteuerbare Aktoren. Hierbei kann es sich um einzelne Aktoren (z.B. einen Motor, eine Pumpe, ein Ventil, ein Schalter), oder um Gruppen derartiger Aktoren oder um ganze Sektionen einer Anlage handeln. Weiterhin umfasst der Prozess Sensoren, die den Steuerungen Istwerte von Prozessvariablen (z.B. Temperaturen, Drücke, Geschwindigkeiten) zur Verfügung stellen. Jede der Steuerungen speichert und führt ein Steuerprogramm aus.

Zusätzlich kann das Automatisierungs-System einen oder mehrere Automatisierungs-Server umfassen. Zum Beispiel kann ein sogenannter Anwendungs-Server vorhanden sein, in dem ein oder mehrere anlagenspezifische Anwendungsprogramme gespeichert sind und beim Betrieb der Anlage zur Ausführung gebracht werden. Diese dienen beispielsweise dazu, in der Anlage die Steuerungen zu konfigurieren, Bediener-Aktivtäten zu erfassen und auszuführen (z.B. Sollwerte von Prozessvariablen einzustellen oder zu ändern) oder Meldungen für Bediener zu erzeugen und auf einer Bedien- und Beobachtungseinrichtung zur Anzeige zu bringen.

Daneben können in dem Automatisierungs-System noch weitere Server vorhanden sein, wie z.B. ein Datenbank-Server.

In einer Vielzahl von Situationen ist es von Vorteil, die industrielle Anlage simulieren zu können, wie zum Beispiel zum Training von Bedienpersonal, beim Anlagen-Engineering, bei der Inbetriebnahme der Anlage oder begleitend zum Betrieb der Anlage.

Es sind hierzu schon verschiedenste Systeme zur Simulation einer industriellen Anlage verfügbar. Diese umfassen in der Regel eine Datenverarbeitungseinrichtung und in einer besonders vorteilhaften Ausgestaltung eine Momentaufnahme-Einrichtung (manchmal auch als "snapshot"-Funktion bezeichnet) zur Abspeicherung von Zuständen einer Simulation der Anlage zu einem definierten oder definierbaren Zeitpunkt.

Beispielsweise offenbart die EP 3 121 667 A1 ein cloud-basierendes Trainingssystem für einen Bediener eines Prozess-Steuersystems. Das System kann auch zum Testen eines neuen industriellen Automatisierungs-Systems genutzt werden. Das Trainingssystem umfasst einen Emulator und einen Simulator. Der Emulator bildet eine virtualisierte oder emulierte industrielle Steuerung nach. Der Simulator bildet eine industrielle Maschine, Prozess oder Arbeitsfläche nach. Ein Snapshot Manager erfasst und speichert Prozesszustände der Simulation und Steuerungszustände der emulierten Steuerung, um Trainingsszenarios bereitzustellen.

Aus der EP 2 790 101 B1 ist es für ein DCS (Distributed Control System bzw. verteiltes Steuerungssystem) bekannt, jedes Element des DCS durch Virtualisierung und/oder Emulation auf einem Host-Computersystem nachzubilden, um das DCS zusammen mit einer Prozesssimulation auf dem Host-Computersystem zu simulieren. Auf dem Host-Computer wird hierzu eine Virtualisierungsschicht mit einer virtuellen Maschine eingeführt, wobei das Verhalten der DCS-Hardware nachgebildet wird durch hauptsächliches Benutzen der Anweisungen des Host-Computers und nur Nachbilden ausgewählter Anweisungen, die spezielle Verarbeitungs-Aktivitäten benötigen, die normalerweise nicht auf einem Host-Computer verfügbar sind. Die Nachbildung des Prozessors einer Steuerung kann auch in Form eines HW-Emulators erfolgen, der in einer Virtualisierungs-Umgebung auf einem Host-Computersystem läuft. In der sich ergebenden Simulationsumgebung für das DCS können die Original SW-Programme oder Firmware auf den jeweils nachgebildeten Prozessoren ausgeführt werden.

Ausgehend hiervon ist es Aufgabe vorliegender Erfindung, ein System zur Simulation einer industriellen Anlage anzugeben, mit dem noch besser als bisher Simulationsszenarien wiederholt und analysiert werden können.

Die Lösung dieser Aufgabe gelingt durch ein System gemäß Patentanspruch 1. Vorteilhafte Ausgestaltungen sind jeweils Gegenstand der Unteransprüche.

Ein erfindungsgemäßes System zur Simulation einer industriellen Anlage umfasst eine Datenverarbeitungseinrichtung und eine Momentaufnahme-Einrichtung zur Abspeicherung von Zuständen einer Simulation der Anlage zu einem definierten oder definierbaren Zeitpunkt, wobei die Anlage, vorzugsweise vollständig, durch zumindest eine virtuelle Maschine nachgebildet ist, die in der Datenverarbeitungseinrichtung ablaufbar ist, und wobei die Momentaufnahme-Einrichtung ausgebildet ist, ein Abbild (vorzugsweise ein vollständiges Abbild) der zumindest einen virtuellen Maschine in der Datenverarbeitungseinrichtung zu einem definierten oder definierbaren Zeitpunkt zu erzeugen und dieses Abbild in einem Datenspeicher abzuspeichern.

Die Architektur einer real in Hardware existierenden industriellen Anlage bzw. die Komponenten dieser Anlage werden somit mit zumindest einer virtuellen Maschine nachgebildet. Vorzugsweise lässt sich eine Software (z.B. ein Betriebssystem), die für die nachgebildeten Komponenten der Anlage entworfen wurde, auf der virtuellen Maschine genauso wie auf der entsprechenden realen Komponente ausführen. Zwischen einem Betriebssystem der Datenverarbeitungseinrichtung und einer darauf ablaufenden virtuellen Maschine kann sich eine abstrahierende Schicht (oftmals Hypervisor oder Virtual Machine Monitor genannt) befinden. Diese Schicht erlaubt in der Regel z.B. den Betrieb mehrerer virtueller Maschinen gleichzeitig auf einem einzigen physischen Rechner und stellt Interaktions- bzw. Kommunikationsmöglichkeiten zwischen den Maschinen bereit.

Wegen der Virtualisierung der (vorzugsweise gesamten) Anlagen-Architektur (closed loop) ist eine Momentaufnahmemöglichkeit (Snapshotfähigkeit) der (vorzugsweise gesamten) Anlagen-Architektur und somit auch eine einfache Duplizierung der gesamten Architektur möglich.

Das Abbild (im Zusammenhang mit Datenspeicherabbilden wird häufig auch der Begriff "Image" verwendet) umfasst den Zustand und die Daten der zumindest einen virtuellen Maschine zu einem bestimmten Zeitpunkt. Der Zustand umfasst den Betriebsstatus der virtuellen Maschine (z.B. eingeschaltet, ausgeschaltet, angehalten). Die Daten umfassen alle Dateien, aus denen sich die virtuelle Maschine zusammensetzt, einschließlich der Dateistruktur. Dazu zählen Festplatten, Arbeitsspeicher und andere Geräte wie virtuelle Netzwerkschnittstellenkarten. Es werden dabei nicht nur die Daten in den Dateien ausgelesen, sondern alle Rohdaten. Mit anderen Worten wird somit ein komplettes Abbild der Installation der Datenverarbeitungseinrichtung inkl. aller Rechnerparameter wie Programmstände, Programmzustände, Speicherinhalte, Netzwerkadressen, Betriebssystemkonfigurationen, etc. erzeugt. Das Simulationssystem kann somit mit geringem Aufwand und hoher Genauigkeit wieder in genau den gleichen Zustand wie bei der Momentaufnahme gebracht und die Simulation fortgesetzt werden. Es können somit beispielsweise Trainingsszenarien, Engineering-Stände oder virtuelle Betriebszustände - über die reinen Prozess-/Steuerungszustände hinaus - geladen und wieder fortgesetzt werden. Dies ist auch wiederholt möglich. Eine aufwendige Abspeicherung zusätzlicher Informationen oder eine Initialisierung bzw. ein zeitlich aufwendiges Anfahren des Simulationssystems, um das Simulationssystem wieder in den Zustand der Momentaufnahme zu bringen, ist nicht notwendig.

Gemäß einer vorteilhaften Ausgestaltung ist die Momentaufnahme-Einrichtung hierzu zusätzlich ausgebildet, den Zustand der zumindest einen virtuellen Maschine in der Datenverarbeitungseinrichtung auf den abgespeicherten Zustand des Abbildes zu setzen, und vorzugsweise dann auch die virtuelle Maschine zum Ablaufen zu bringen.

Im Fall mehrerer virtueller Maschinen ist die Momentaufnahme-Einrichtung vorzugsweise ausgebildet, ein zeitgleiches Abbild der virtuellen Maschinen zu erzeugen. Hierdurch kann eine hohe Genauigkeit bei den Simulationsszenarien gewährleistet werden.

Im Fall mehrerer virtueller Maschinen ist es grundsätzlich möglich, zeitgleich jeweils ein Abbild jeder der Maschinen zu erzeugen. Vorzugsweise ist die Momentaufnahme-Einrichtung aber ausgebildet, für die mehreren virtuellen Maschinen ein einziges gemeinsames Abbild zu erzeugen. Hierdurch kann Speicher- und Administrationsaufwand für die Abbilder reduziert werden.

Gemäß einer weiteren vorteilhaften Ausgestaltung sind ein in der Anlage ablaufender physikalischer Prozess und ein Automatisierungssystem für diesen Prozess durch jeweils zumindest eine virtuelle Maschine nachgebildet. Hierdurch ist eine gute Strukturierung der Simulation möglich. Bereits bestehende Simulatoren für den physikalischen Prozess und das Automatisierungssystem können dann in einfacher Weise durch Virtualisierung in ein erfindungsgemäßes System überführt werden.

Gemäß einer weiteren vorteilhaften Ausgestaltung umfasst das Automatisierungssystem zumindest eine Steuerung, die zumindest einen Teilbereich des Prozesses in Abhängigkeit von dessen Betriebszuständen steuert, und einen Anwendungs-Server mit zumindest einem anlagenspezifischen Programm, das der Steuerung Sollwerte für Prozessvariablen vorgibt und Istwerte für die Prozessvariablen von der Steuerung empfängt, wobei die zumindest eine Steuerung und der eine Anwendungs-Server durch jeweils zumindest eine virtuelle Maschine nachgebildet sind.

Gemäß einer weiteren vorteilhaften Ausgestaltung ist die Anlage durch Virtualisierung eines Anwendungs-Servers, eines Steuerungs-Emulations-Servers und eines Prozesssimulations-Servers nachgebildet. Ein "Hardware-in-the-Loop"-Testsystem mit einem (Original-)Anwendungs-Server, einem Original-Automatisierungs-Server und einem Prozesssimulator-Server kann dann in einem ersten Schritt in ein "Software-in-the-Loop"-Testsystem mit einem Anwendungs-Server, einem Emulations-Server und einem Prozesssimulations-Server abgeändert und in einem zweiten Schritt dann diese drei Server virtualisiert werden. Alle die Server laufen dann als, vorzugsweise jeweils separate, virtuelle Maschine(n) auf der Datenverabeitungseinrichtung, die dann vorzugsweise die Funktion eines Host-Servers hat.

Bevorzugt umfasst der Datenspeicher mehrere Abbilder der Anlage zu jeweils unterschiedlichen Zeitpunkten.

Der Datenspeicher kann dabei zusätzlich auch Abbilder unterschiedlicher industrieller Anlagen umfassen.

Der Datenspeicher kann dabei am Ort der Datenverarbeitungseinrichtung oder entfernt davon sein. Der Datenspeicher kann ein an einem einzigen Ort befindlicher oder ein über mehrere Orte verteilter Datenspeicher sein.

Die Datenverarbeitungseinrichtung kann lokal in der industriellen Anlage oder entfernt von der industriellen Anlage sein. Vorzugsweise ist die Datenverarbeitungseinrichtung cloud-basiert.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: eine industrielle Anlage mit einem Automatisierungssystem,
- FIG 2: ein erstes Ausführungsbeispiel eines erfindungsgemäßen Systems zur Simulation der Anlage von FIG 1,
- FIG 3: ein zweites Ausführungsbeispiel eines erfindungsgemäßen Systems zur Simulation der Anlage von FIG 1,
- FIG 4: eine Verwaltung mehrerer Abbilder jeweils unterschiedlicher Anlagen,
- FIG 5: eine lokale Einbindung eines Simulations-Systems in die Anlage von FIG 1,
- FIG 6: eine cloud-basierte Einbindung eines Simulations-Systems in die Anlage von FIG 1,
- FIG 7: eine Einbindung eines Simulations-Systems in ein Engineering-System.

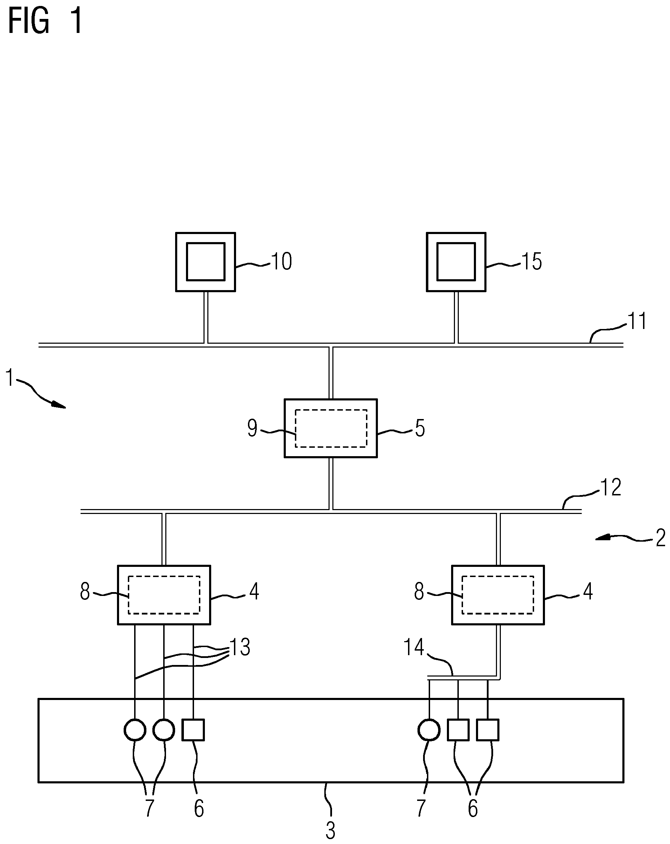

FIG 1 zeigt in vereinfachter Darstellung eine industrielle Anlage 1 mit einem Automatisierungssystem 2. Industrielle Anlagen mit einem Automatisierungssystem kommen in verschiedensten Industriesektoren zum Einsatz, zum Beispiel in der Energieerzeugung, der Prozess-Industrie (z.B. Chemie, Pharma, Metall, Öl- und Gas) und der diskreten Fertigungsindustrie. Der eigentliche branchenspezifische Prozess 3, z.B. ein Energieerzeugungs- oder Produktionsprozess, wird durch das Automatisierungssystem 2 gesteuert und/oder geregelt. Das Automatisierungssystem 2 umfasst hierzu eine oder mehrere industrielle Steuerungen (hier die Steuerungen 4) und zumindest einen Automatisierungs-Server 5.

Jede der Steuerungen 4 steuert dann den Betrieb jeweils eines Teilbereichs des Prozesses 3 in Abhängigkeit von dessen Betriebszuständen. Der Prozess 3 umfasst hierzu von den Steuerungen ansteuerbare Aktoren 6. Hierbei kann es sich um einzelne Aktoren (z.B. einen Motor, eine Pumpe, ein Ventil, ein Schalter), oder um Gruppen derartiger Aktoren oder um ganze Sektionen einer Anlage handeln. Weiterhin umfasst der Prozess Sensoren 7, die den Steuerungen 4 Istwerte von Prozessvariablen (z.B. Temperaturen, Drücke, Geschwindigkeiten) zur Verfügung stellen. Jede der Steuerungen 4 speichert und führt ein Steuerprogramm 8 aus.

Bei dem Automatisierungs-Server 5 kann es sich zum Beispiel um einen sogenannten Anwendungs-Server (Application-Server) handeln, in dem ein oder mehrere anlagenspezifische Anwendungsprogramme 9 gespeichert sind und beim Betrieb der Anlage 1 zur Ausführung gebracht werden. Diese dienen beispielsweise dazu, in der Anlage 1 die Steuerungen 4 zu konfigurieren, Bediener-Aktivtäten an der Bedien- und Beobachtungsstation (HMI) 10 zu erfassen und auszuführen (z.B. Sollwerte von Prozessvariablen einzustellen oder zu ändern) oder Meldungen für Bediener zu erzeugen und auf der Bedien- und Beobachtungsstation (HMI) 10 zur Anzeige zu bringen. Daneben kann der Anwendungs-Server für das Anlagen-Engineering und zur Archivierung von Prozessdaten und Bedienhandlungen dienen.

In dem Automatisierungs-System 2 können noch weitere Server vorhanden sein, wie z.B. ein Datenbank-Server. Außerdem kann eine Engineering-Station 15 vorhanden sein.

Alternativ kann das Anwendungsprogramm 9 auch in einer Cloud gespeichert sein.

Ein Kommunikationsnetzwerk der Anlage 1 umfasst auf übergeordneter Ebene ein Anlagen- Netzwerk 11, über das der Automatisierungs-Server 5 mit der Bedien- und Beobachtungsstation (HMI) 10 in Kommunikation steht, und ein Steuerungs-Netzwerk 12 (häufig auch als "System-Netzwerk" bezeichnet), über das die Steuerungen 4 miteinander und mit dem Automatisierungs-Server 5 in Kommunikationsverbindung stehen. Die Verbindung der Steuerungen 4 mit den Aktoren 6 und Sensoren 7 kann über diskrete Signalleitungen 13 oder über einen Feldbus 14 erfolgen.

Das Automatisierungssystem 2 ohne die Feldgeräte (d.h. ohne Aktoren 5 und Sensoren 6) wird häufig auch als "Prozessleitsystem" bezeichnet.

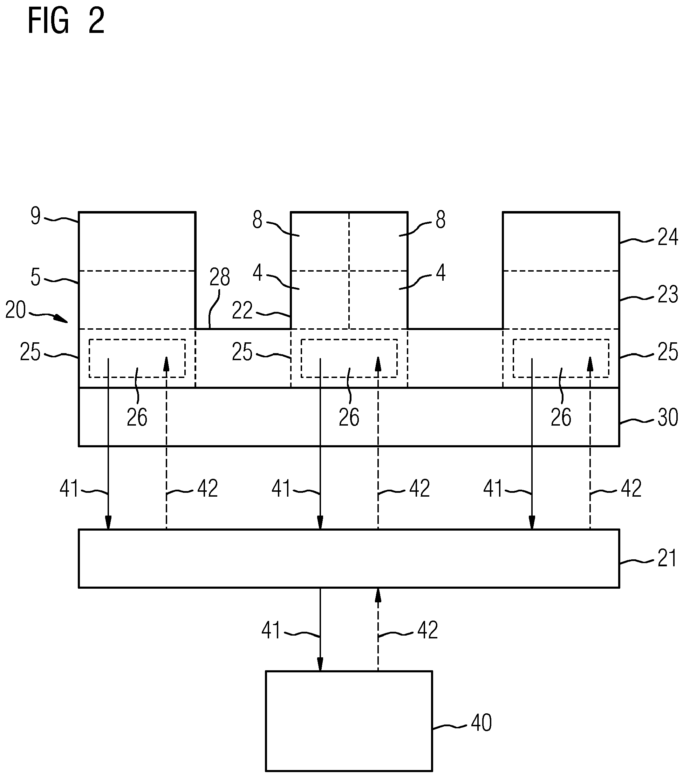

Ein in FIG 2 schematisch gezeigtes System 20 zur Simulation der industriellen Anlage umfasst eine Datenverarbeitungseinrichtung in Form eines Servers 30 (inklusive Betriebssystem), im Folgenden auch als "Host-Server" bezeichnet, und eine Momentaufnahme-Einrichtung 21 zur Abspeicherung von Zuständen einer Simulation der Anlage 1 zu einem definierten oder definierbaren Zeitpunkt. Die Momentaufnahme-Einrichtung 21 kann eine Software-Funktion des Servers 30 sein, oder auch eine davon getrennte Einrichtung in Hardware und/oder Software.

Die Anlage 1 ist hierbei durch Virtualisierung der Hardware des Anwendungs-Servers 5, der Hardware eines Emulations-Servers 22 und der Hardware eines Prozesssimulations-Servers 23 nachgebildet.

Der Emulations-Server 22 emuliert dabei die Hardware der Steuerungen 4, wobei jeweils eine Instanz für jede der Steuerungen 4 vorhanden ist. Auf dem Emulations-Server 22 sind die Steuerprogramme 8 der Steuerungen 4 gespeichert und zum Ablauf bringbar.

Auf dem Prozesssimulations-Server 23 sind ein oder mehrere Programme 24 zur Simulation des Prozesses 3 gespeichert und zum Ablauf bringbar.

Der Prozess-Simulation kann dabei ein dynamisches Prozessmodell zugrunde liegen. Das Prozessmodell kann dabei auch auf mehrere Prozess-Simulationsserver verteilt sein. Entsprechend würde dann für jeden der Prozess-Simulationsserver jeweils eine virtuelle Maschine vorhanden sein. Grundsätzlich sind dabei einfache datengetriebene Modelle ohne echte thermodynamische Modellierung bis hin zu Modellen mit umfassenden thermodynamischen und physikalischen Zusammenhängen und detaillierten Apparatemodellen möglich.

Die virtuellen Maschinen 25 sind dabei in einer Virtualisierungsschicht 28 eingebettet, die die Kommunikationskanäle der realen Komponenten nachbildet.

Vom Prozessmodell des Prozesssimulations-Servers 23 werden Messgrößen und Rückmeldungen an den Emulations-Server 22 gesendet, welcher diese verarbeitet und wiederum Signale (z.B. Stellgrößen) an das Modell zurücksendet. Beide können somit über die Virtualisierungsschicht 28 miteinander interagieren bzw. komunizieren. Vom Emulations-Server 22 werden wiederum Daten an den Anwendungs-Servers 5 gesendet, welcher diese verarbeitet und wiederum Befehle an den Emulations-Server 22 sendet. Auch hier können beide Server über die Virtualisierungsschicht 28 miteinander interagieren.

Der Anwendungs-Server 5, der Emulations-Server 22 und der Prozesssimulations-Server 23 bzw. deren Verhalten sind dabei durch jeweils eine separate virtuelle Maschine 25 nachgebildet.

In der sich ergebenden Simulationsumgebung für die Anlage 1 können die Original SW-Programme oder Firmware auf den jeweils nachgebildeten Servern ausgeführt werden.

Die Anlage 1 ist somit vollständig durch die drei virtuellen Maschinen 25 nachgebildet, die auf dem Host-Server 30 ablaufbar sind.

Die Momentaufnahme-Einrichtung 21 ist ausgebildet, ein vollständiges, zeitgleiches Abbild 26 der drei virtuellen Maschinen 25 zu einem definierten oder definierbaren Zeitpunkt zu erzeugen und dieses Abbild in einem Datenspeicher 40 abzuspeichern. Dies ist in FIG 2 anhand der Pfeile 41 symbolisiert.

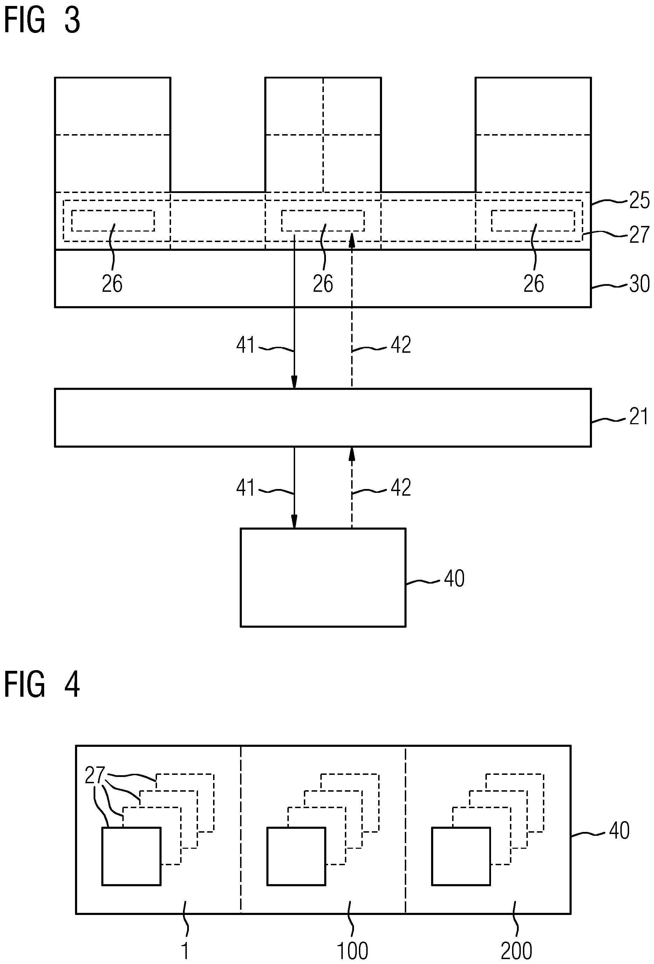

Wie in FIG 3 dargestellt, erzeugt die Momentaufnahme-Einrichtung bevorzugt für die drei virtuellen Maschinen 25 ein einziges gemeinsames zeitgleiches Abbild 27.

Das Abbild 26, 27 (im Zusammenhang mit Datenspeicherabbilden wird häufig auch der Begriff "Image" verwendet) umfasst den Zustand und die Daten der virtuellen Maschine 25 zu einem bestimmten Zeitpunkt. Der Zustand umfasst den Betriebsstatus der virtuellen Maschine 25 (z.B. eingeschaltet, ausgeschaltet, angehalten). Die Daten umfassen alle Dateien, aus denen sich die virtuelle Maschine zusammensetzt, einschließlich der Dateistruktur. Dazu zählen Festplatten, Arbeitsspeicher und andere Geräte wie virtuelle Netzwerkschnittstellenkarten. Es werden dabei nicht nur die Daten in den Dateien gelesen, sondern alle Rohdaten. Mit anderen Worten wird somit ein komplettes Abbild der für die virtuellen Maschinen 25 relevanten Installation des Servers 30 inkl. aller Rechnerparameter wie Programmstände, Programmzustände, Speicherinhalte, Netzwerkadressen, Betriebssystemkonfigurationen, etc. erzeugt. Die Abbilder können dabei sowohl bei "eingeschalteten" als auch bei "ausgeschalteten" virtuellen Servern bzw. virtuellen Maschinen 25 erzeugt werden.

Die Momentaufnahme-Einrichtung 21 ist weiterhin auch ausgebildet, den Zustand der virtuellen Maschinen 25 in dem Server 30 auf den abgespeicherten Zustand des jeweiligen Abbildes 26 der virtuellen Maschinen 25 zu setzen und die virtuellen Maschinen 25 zum Ablaufen zu bringen. Dies ist in FIG 2 anhand der Pfeile 42 symbolisiert.

Von der Momentaufnahme-Einrichtung 21 können in dem Datenspeicher 40 dabei mehrere Abbilder 27 der Anlage zu jeweils unterschiedlichen Zeitpunkten gespeichert und nach Bedarf wieder geladen werden. Die Momentaufnahme-Einrichtung 21 ist dabei ausgebildet, die Abbilder 27 in dem Datenspeicher 40 zu verwalten, Abbilder zu löschen und umfassende Abbilder-Strukturen zu erstellen und zu verwalten.

Die Abbilder 27 können aber auch in einen anderen zu dem Server 30 unterschiedlichen Server, der eine Virtualiserungsschicht 28 enthält, geladen und dort gestartet werden.

Die Momentaufnahme-Einrichtung 21 weist eine nicht näher dargestellte Bediener-Schnittstelle für einen Bediener (im Fall eines Trainingssystems für einen Trainer) auf, mittels der es möglich ist, die Zeitpunkte der Momentaufnahmen zu definieren, die abgespeicherten Abbilder 27 zu verwalten und ausgewählte Abbilder 27 wieder in den Server 30 zu laden und die Simulation zu starten. Weiterhin können an den Server 30 verschiedene Client-Rechner mit zugehörigen Nutzerschnittstellen angeschlossen sein, über die Nutzer die Simulation beobachten und steuernd auf die Simulation eingreifen können.

Zu Beginn einer Bediener-Trainingssitzung muss die Simulationsumgebung konfiguriert werden. Dies umfasst - gesteuert durch den Server 30 - das Laden eines der Abbilder 27 aus dem Speicher 31 in den Server 20, Konfigurieren des Datenaustausches zwischen den virtuellen Maschinen sowie das Downloaden des Prozess-Simulatorprogrammes 24, der Steuerprogramme 8 und des Anwendungsprogrammes 9.

Wie in FIG 4 dargestellt, kann der Datenspeicher 40 Abbilder 27 mehrerer unterschiedlicher industrieller Anlagen 1, 100, 200 umfassen.

Der Datenspeicher 40 kann dabei am Ort des Servers 30 oder entfernt davon sein. Der Datenspeicher 40 kann ein an einem einzigen Ort befindlicher oder ein über mehrere Orte verteilter Datenspeicher sein.

Der Server 30 kann lokal in der industriellen Anlage 1 oder entfernt von der industriellen Anlage 1 sein. Vorzugsweise ist der Server 30 cloud-basiert.

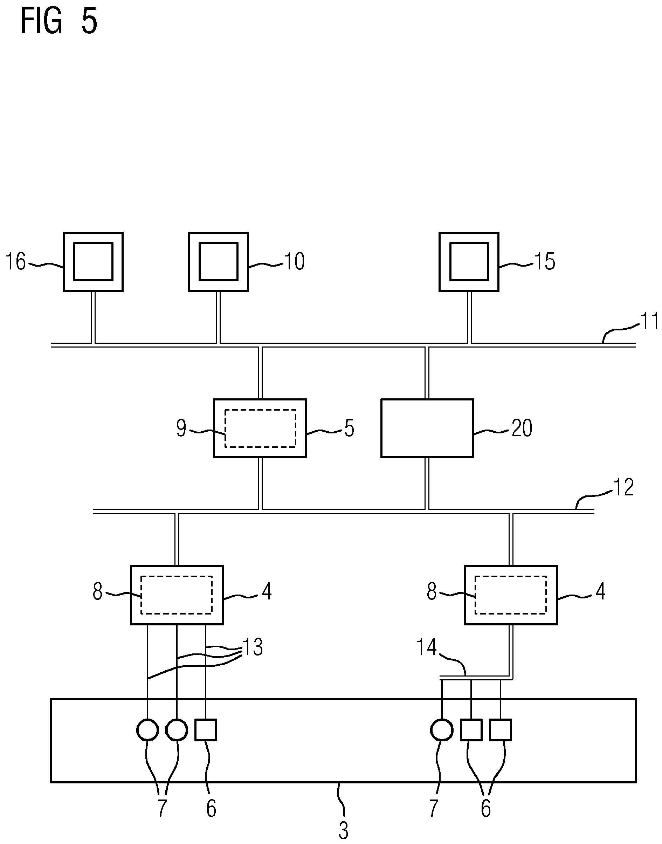

FIG 5 zeigt in vereinfachter Darstellung eine Einbindung des Simulationssystems 20 von FIG 3 in die Anlage 1 von FIG 1. Das Simulationssystem 20 ist dabei lokal vor Ort in der Anlage 1 installiert. Es kann beispielsweise zum Training von Bedienpersonal mittels der Bedien- und Beobachtungsstation 10 oder einer gesonderten Trainingsstation 16 genutzt werden. Es kann auch zum Engineering der Anlage 1, zu deren virtueller Inbetriebnahme oder begleitend zum Betrieb der Anlage (z.B. für eine vorausschauende Wartung) mittels der Engineering-Station 15 oder einer nicht dargestellten gesonderten Station genutzt werden.

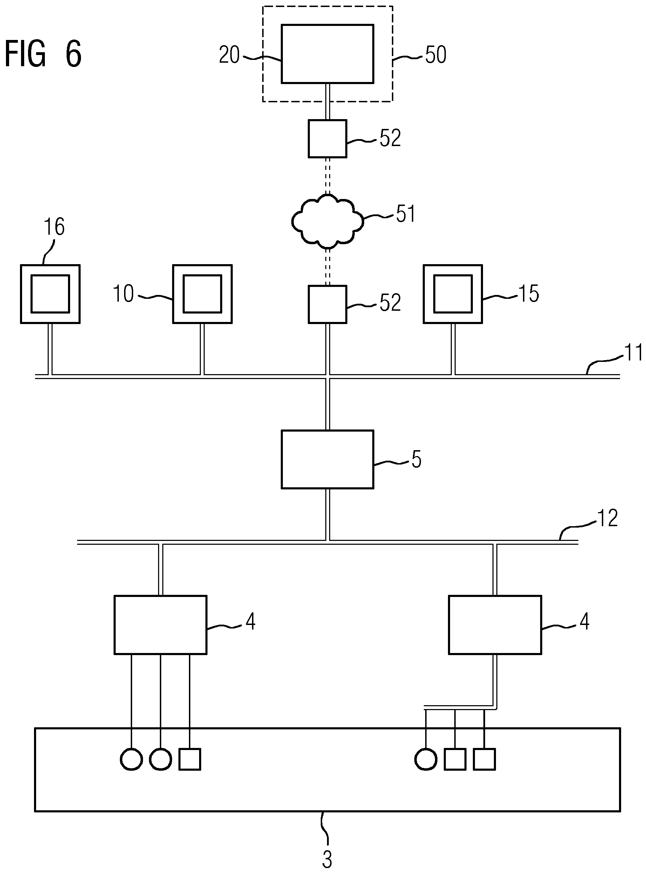

FIG 6 zeigt in vereinfachter Darstellung eine weitere Möglichkeit der Einbindung des Simulationssystems 20 in die Anlage 1 von FIG 1. Im Unterschied zu FIG 5 ist das Simulationssystems 20 dabei nicht lokal vor Ort in der Anlage 1 installiert, sondern befindet sich in einer Cloud 50. Die Verbindung zur Cloud erfolgt über das Internet 51 mittels zweier Gateways 52. In diesem Fall können dann mehrere örtlich unterschiedliche Anlagen auf die in der Cloud 50 gespeicherten Abbilder zugreifen und zum Beispiel zum Zwecke des Trainings, des Engineerings, der virtuellen Inbetriebnahme oder begleitend zum Betrieb der Anlage nutzen.

Im Falle eines Trainingssystems kann ein Trainer über die Trainingsstation 16 oder einer gesonderten Trainerstation mit dem Simulationssystem 20 agieren, die Abbilder 27 laden sowie die Simulationen starten und stoppen. Zusätzlich können vom Trainer Trainingsszenarien aufgerufen werden. Darunter versteht man komplexe vordefinierte Störszenarien, die in verschiedenen Anlagenzuständen auch im realen Prozess auftreten können. Dazu zählt zum Beispiel ein Ausfall von Heiz- oder Kühlsystemen oder von Lüftungssystemen. Weiterhin sind auf der Trainingsstation 16 Möglichkeiten implementiert, um standardisierte Fehlfunktionen der Anlage zu simulieren. Dazu gehören z.B. das Fouling in Wärmetauschern, Störungen in Pumpen, sowie Fehlfunktionen von Ventilen und Sensoren. Zusätzlich lassen sich Rahmenbedingungen verändern, wie z.B. Eingangskonzentrationen, Umgebungstemperaturen oder Kühlwassertemperaturen des Prozesses.

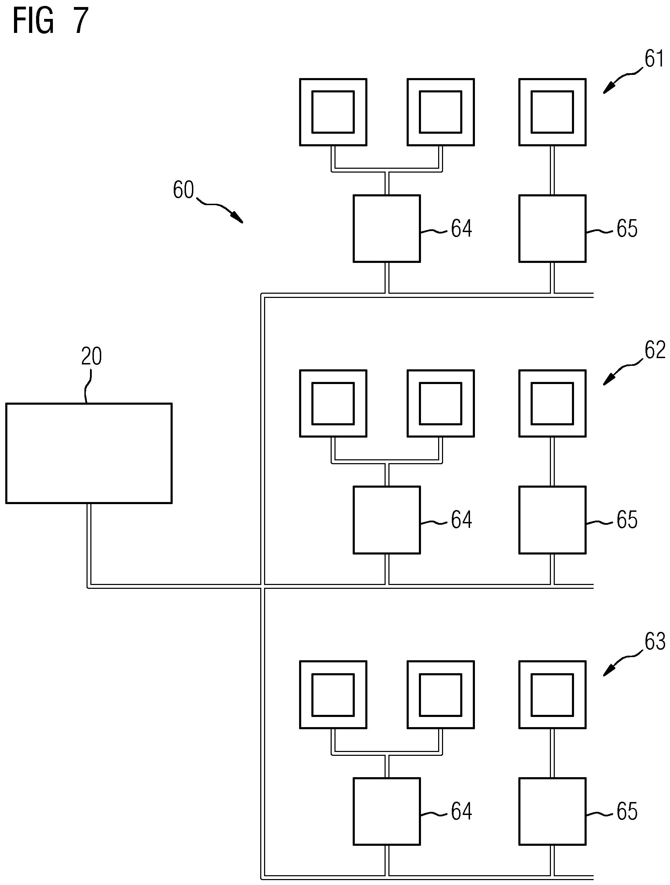

FIG 7 zeigt beispielhaft ein Engineering-System 60, bei dem mit Hilfe des Simulations-Systems 20 ein zum Engineering begleitender Test mit Hilfe von Simulation ermöglicht wird. Das originale Automatisierungsprogramm wird gegen simulierte Geräte und ein simuliertes Anlagenmodell getestet. Das Engineering-System 60 umfasst neben dem Simulations-System 20 mehrere Engineering-Testplätze 61, 62, 63, die jeweils einen Client-Rechner 64 ("Thin Client") für den simulierten Anwendungs-Server 5 und jeweils einen Client-Rechner 65 ("Thin Client") für den Prozess-Simulations-Server 23 umfassen. An jeden der Client-Rechner 64, 65 sind jeweils eine oder mehrere Ein-/Ausgabeeinheiten für Bedienpersonal angeschlossen, mittels denen die Simulation beobachtet und gesteuert werden kann.

Das erfindungsgemäße Simulationssystem ermöglicht somit beim Engineering, beim Test und bei der Inbetriebnahme eine terminliche Unabhängigkeit von der Original-HW (der Integrationstest liegt häufig auf dem kritischen Terminpfad). Das Simulationssystem ist ortsunabhängig - es kann sowohl lokal vor Ort als auch auf einer Cloud mit weltweitem Zugriff installiert werden. Es können verschiedene Trainings- und Engineering-Szenarien (über die reinen Prozess- /Steuerungszustände hinaus) wiederhergestellt werden. Bei Bedarf (z.B. neue Anforderungen während der Inbetriebsetzungs- oder Gewährleistungsphase) kann eine virtuelle Testplattform auf Basis des Simulationssystems mit sehr geringem Aufwand wieder bereitgestellt werden. Die Qualität des Testens kann erhöht werden, da terminliche Unabhängigkeit von der Original-Hardware besteht. Wegen der Virtualisierung der gesamten Server Architektur (closed loop) ist eine Momentaufnahmemöglichkeit (Snapshotfähigkeit) der kompletten Server Architektur und somit auch eine einfache Duplizierung der gesamten Server Architektur möglich. Bei einer Installation des Simulationssystems in einer Cloud kann die Flexibilität gesteigert werden (z.B. können Spezialisten projektübergreifend Know-how einbringen) .

## Patentansprüche

1. System (20) zur Simulation einer industriellen Anlage (1), umfassend eine Datenverarbeitungseinrichtung (30) und eine Momentaufnahme-Einrichtung (21) zur Abspeicherung von Zuständen einer Simulation der Anlage (1) zu einem definierten oder definierbaren Zeitpunkt, **dadurch gekennzeichnet, dass** die Anlage (1) durch zumindest eine virtuelle Maschine (25) nachgebildet ist, die in der Datenverarbeitungseinrichtung (30) ablaufbar ist, und dass die Momentaufnahme-Einrichtung (21) ausgebildet ist, ein Abbild (26) der zumindest einen virtuellen Maschine (25) zu einem definierten oder definierbaren Zeitpunkt zu erzeugen und dieses Abbild in einem Datenspeicher (40) abzuspeichern.

2. System nach Anspruch 1, **dadurch gekennzeichnet, dass** die Momentaufnahme-Einrichtung (21) ausgebildet ist, den Zustand der virtuellen Maschine (25) in der Datenverarbeitungseinrichtung (30) auf den abgespeicherten Zustand des Abbildes zu setzen.

3. System nach Anspruch 1 oder 2, **dadurch gekennzeichnet, dass** die Momentaufnahme-Einrichtung (21) im Fall mehrerer virtueller Maschinen (25) ausgebildet ist, ein zeitgleiches Abbild (26) der virtuellen Maschinen (25) zu erzeugen.

4. System nach einem der vorhergehenden Ansprüche, **dadurch gekennzeichnet, dass** die Momentaufnahme-Einrichtung (21) im Fall mehrerer virtueller Maschinen (25) ausgebildet ist, für die mehreren virtuellen Maschinen (25) ein einziges gemeinsames Abbild (27) zu erzeugen.

5. System nach einem der vorhergehenden Ansprüche, **dadurch gekennzeichnet, dass** ein in der Anlage (1) ablaufender physikalischer Prozess (3) und ein Automatisierungssystem (2) für diesen Prozess (3) durch jeweils zumindest eine virtuelle Maschine (25) nachgebildet sind.

6. System nach Anspruch 5, **dadurch gekennzeichnet, dass** das Automatisierungssystem (2) zumindest eine Steuerung (4), die zumindest einen Teilbereich des Prozesses (3) in Abhängigkeit von dessen Betriebszuständen steuert, und einen Anwendungs-Server (5) mit zumindest einem anlagenspezifischen Programm (9), das der Steuerung (4) Sollwerte für Prozessvariablen vorgibt und Istwerte für die Prozessvariablen von der Steuerung (4) empfängt, umfasst, wobei die zumindest eine Steuerung (4) und der Anwendungs-Server (5) durch jeweils zumindest eine virtuelle Maschine (25) nachgebildet sind.

7. System nach einem der vorhergehenden Ansprüche, **dadurch gekennzeichnet, dass** die Anlage durch Virtualisierung eines Anwendungs-Servers (5), eines Steuerungs-Emulations-Servers (22) und eines Prozesssimulations-Servers (26) nachgebildet ist.

8. System nach Anspruch 7, **dadurch gekennzeichnet, dass** der Anwendungs-Server (5), der Steuerungs-Emulations-Server (22) und der Prozesssimulations-Server (26) durch jeweils eine separate virtuelle Maschine nachgebildet sind.

9. System nach einem der vorhergehenden Ansprüche, **dadurch gekennzeichnet, dass** der Datenspeicher (40) mehrere Abbilder (26, 27) der Anlage (1) zu jeweils unterschiedlichen Zeitpunkten umfasst.

10. System nach einem der vorhergehenden Ansprüche, **dadurch gekennzeichnet, dass** der Datenspeicher (40) Abbilder (26, 27) unterschiedlicher industrieller Anlagen (1, 100, 200) umfasst.

11. System nach einem der vorhergehenden Ansprüche, **dadurch gekennzeichnet, dass** der Datenspeicher (40) als ein verteilter Datenspeicher ausgebildet ist.

12. System nach einem der vorhergehenden Ansprüche, **dadurch gekennzeichnet, dass** die Datenverarbeitungseinrichtung (30) entfernt von der industriellen Anlage (1), insbesondere auf einer Cloud installiert ist.
